# EUROPÄISCHE PATENTSCHRIFT

(11) **EP 0 698 743 B1**
(45) Veröffentlichungstag und Bekanntmachung des Hinweises auf die Patenterteilung: **08.12.1999**
(21) Anmeldenummer: 95112249.8
(22) Anmeldetag: 03.08.1995
(51) Int. Cl.: F16C 27/06, F16F 1/38

(54) **Lagerbuchse und Verfahren zu deren Herstellung**
Bearing bush and method for producing the bush
Coussinet et procédé pour son fabrication

(30) Priorität: 24.08.1994 DE 4430037
(43) Veröffentlichungstag der Anmeldung: 28.02.1996
(73) Patentinhaber: Metzeler Gimetall AG, D-64744 Breuberg (DE)
(72) Erfinder: Salz, Robert, D-53577 Neustadt/Wied (DE)
(74) Vertreter: Preissner, Nicolaus, Dipl.-Ing.

(56) Entgegenhaltungen:
- EP-A- 0 226 702
- EP-A- 0 431 506
- DE-A- 2 737 898
- DE-A- 3 613 123
- DE-A- 3 722 997
- FR-A- 2 202 556
- GB-A- 351 196
- GB-A- 1 000 691
- GB-A- 1 045 827

## Beschreibung

Die Erfindung betrifft eine Lagerbuchse und ein Verfahren zu deren Herstellung.

Bekannte Lagerbuchsen, die insbesondere bei Kraftfahrzeugen zum Einsatz kommen, besitzen ein Innenrohr aus Metall und ein ebenfalls aus Metall hergestelltes, das Innenrohr umgebende Außenrohr, wobei zwischen Innenrohr und Außenrohr eine Vulkanisationsschicht vorgesehen ist, siehe GB-A-1 000 691.

Der Erfindung liegt die Aufgabe zugrunde, eine Lagerbuchse vorzuschlagen, bei der bei einer Torsionsbeanspruchung das Außenrohr relativ zum Innenrohr drehbar ist und das in einfacher Weise herstellbar ist.

Zur Lösung dieser Aufgabe wird eine Lagerbuchse mit den Merkmalen des Patentanspruches 1 vorgeschlagen. Die erfindungsgemäße Lagerbuchse weist ein Innenrohr aus Metall, und ein auf dem Innenrohr mindestens in Umfangsrichtung gleitbeweglich aufsitzendes Zwischenrohr aus Kunststoff auf, dessen Innenseite entsprechend der Außenkontur des Innenrohres geformt ist und an dessen Außenseite eine Vulkanisationsschicht aufgebracht ist.

Bei einer Torsionsbeanspruchung kann somit das Innenrohr relativ zu dem Zwischenrohr und der hiermit verbundenen Vulkanisationsschicht verdreht werden. Eine derartige Lagerbuchse besitzt einen besonders einfachen Aufbau und kann in einfacher Weise hergestellt werden. Da das Zwischenrohr aus Kunststoff besteht, kann es bereits bei der Vulkanisation in die Vulkanisationsform eingelegt werden, wodurch bereits während des Vulkanisationsvorganges eine Anpassung des Zwischenrohres an die Außenkontur des Innenrohres erfolgt. Vorteilhaft werden für das Zwischenrohr Kunststoffe mit niedrigen Reibwerten, beispielsweise Polyamid verwendet.

Vorteilhafte Ausgestaltungen der Erfindung sind in den Unteransprüchen aufgeführt.

In einfacher Weise kann eine axiale Sicherung des Zwischenrohres und der hiermit verbundenen Teile dadurch erreicht werden, daß das Innenrohr eine das Zwischenrohr in axialer Richtung sichernde Außenkontur aufweist. Zweckmäßig kann das Innenrohr mindestens eine endseitige Abschrägung aufweisen, auf der das Zwischenrohr aufliegt. Auch bei diesen Ausgestaltungen wird das Zwischenrohr bereits während der Vulkanisation in die Vulkanisationsform eingelegt und entsprechend der Außenkontur des Innenrohres verformt.

Bei einer weiteren Ausgestaltung kann das Innenrohr eine gebogene Außenkontur aufweisen, um eine kardanische Auslenkung des auf dem Innenrohr aufsitzenden Zwischenrohres zu ermöglichen.

Vorteilhaft kann die Vulkanisationsschicht mit einer seitlich abragenden Dichtlippe ausgebildet sein.

Um eine besonders gute Verbindung zur Vulkanisationsschicht zu gewährleisten, kann die Außenseite des Zwischenrohres mit einem Haftmittel versehen sein.

In weiterer Ausgestaltung kann die Lagerbuchse auch ein mit der Vulkanisationsschicht verbundenes Außenrohr aufweisen. Dieses kann aus Metall, aber auch aus Kunststoff oder anderen Materialien bestehen.

Bei einem erfindungsgemäßen Verfahren zur Herstellung einer derartigen Lagerbuchse ist vorgesehen, daß das Innenrohr und das Zwischenrohr aus Kunststoff zusammen in die Vulkanisationsform eingelegt werden, wobei während der Vulkanisation das Zwischenrohr der Außenkontur des Innenrohres entsprechend verformt wird. Bei dem Vulkanisationsvorgang wird das Zwischenrohr aus Kunststoff im wesentlichen spielfrei entsprechend der Außenkontur des Innenrohres verformt. Nach der Vulkanisation ist das Zwischenrohr in Umfangsrichtung relativ zu dem Innenrohr drehbar.

Vorteilhaft wird auf die Außenseite des Zwischenrohres ein Haftmittel aufgebracht, das die Verbindung zur Vulkanisationsschicht verbessert.

Nachfolgend wird die Erfindung anhand vorteilhafter Ausführungsformen beschrieben, die in der Zeichnung in schematischer Weise dargestellt sind.

Hierin zeigen:
- Fig. 1: einen Vertikalschnitt durch eine erste Ausführungsform der erfindungsgemäßen Lagerbuchse,
- Fig. 2: einen Vertikalschnitt durch eine zweite Ausführungsform der erfindungsgemäßen Lagerbuchse, bei der das Innenrohr zur axialen Sicherung des Zwischenrohres endseitige Abschrägungen aufweist,
- Fig. 3: einen Vertikalschnitt durch eine dritte Ausführungsform der erfindungsgemäßen Lagerbuchse, bei der die Vulkanisationsschicht endseitige Dichtlippen aufweist,
- Fig. 4: einen Vertikalschnitt durch eine vierte Ausführungsform der erfindungsgemäßen Lagerbuchse, bei der das Innenrohr eine gebogene Außenkontur aufweist, um eine kardanische Auslenkung des hierauf aufsitzenden Zwischenrohres und der hiermit verbundenen Teile zu ermöglichen, und
- Fig. 5: einen Vertikalschnitt durch eine weitere Ausführungsform der erfindungsgemäßen Lagerbuchse, bei der kein Außenrohr vorgesehen ist.

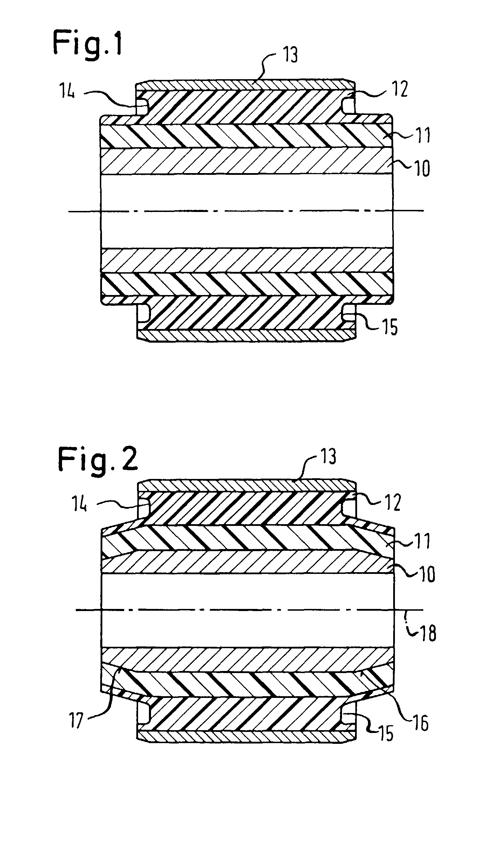

Für die nachfolgende Figurenbeschreibung der in den Figuren 1 bis 4 dargestellten Ausführungsformen der erfindungsgemäßen Lagerbuchse werden für gleiche oder gleichartige Teile identische Bezugszeichen verwendet.

Die in Fig. 1 dargestellte Lagerbuchse besitzt ein zylinderförmiges Innenrohr 10 aus Metall. Am Außenumfang des Innenrohres 10 sitzt spielfrei ein Zwischenrohr 11 aus Kunststoff auf, das relativ zu dem Innenrohr 10 in Umfangsrichtung drehbeweglich ist. Auf die Außenseite des Zwischenrchres 11 ist eine Vulkanisationsschicht 12 aufgebracht, wobei zur Verbesserung der Hafteigenschaften ein geeignetes Haftmittel zum Einsatz kommen kann.

Das Zwischenrohr 11 ist über die Vulkanisationsschicht 12 aus gummielastischem Material mit einem Außenrohr 13 aus Metall verbunden. Somit gestattet diese Anordnung bei einer Torsionsbeanspruchung der Lagerbuchse eine relative Verdrehung des Zwischenrohres 11 und des über die Vulkanisationsschicht 12 hiermit verbundenen Außenrohres 13. An den gegenüberliegenden Stirnseiten ist an der Vulkanisationsschicht 12 eine Umfangsnut 14, 15 ausgebildet.

Die in Fig. 2 dargestellte Lagerbuchse weist ein Innenrohr 10 aus Metall auf, das endseitig mit Abschrägungen 16, 17 versehen ist, die bezüglich einer Längsachse 18 der Lagerbuchse konvergieren. Wie aus Fig. 2 hervorgeht, sitzt das Zwischenrohr 11 aus Kunststoff spielfrei auf den Abschrägungen 16, 17 auf. Hierdurch wird gewährleistet, daß das Zwischenrohr 11 und das hiermit über die Vulkanisationsschicht 12 verbundene Außenrohr in axialer Richtung bezüglich des Innenrohres 10 gesichert ist. In Umfangsrichtung ist das Zwischenrohr 11 und die hiermit verbundenen Teile bezüglich des Innenrohres 10 drehbeweglich angeordnet.

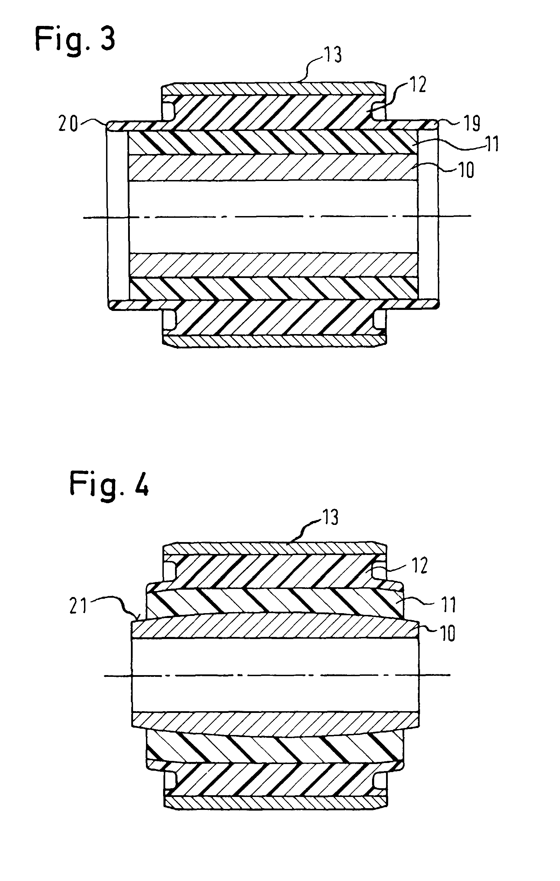

Die in Fig. 3 dargestellte Lagerbuchse besitzt einen ähnlichen Aufbau wie die Lagerbuchse gemäß Fig. 1. Im Unterschied hierzu weist die Lagerbuchse gemäß Fig. 3 seitlich abragende Dichtlippen 19, 20 auf, die von der Vulkanisationsschicht 12 ausgehen. Wie aus Fig. 3 hervorgeht, überragen die Dichtlippen 19, 20 den Endbereich des Innenrohres 10 und des hierauf aufsitzenden Zwischenrohres 12 aus Kunststoff.

Fig. 4 zeigt eine weitere Ausführungsform einer erfindungsgemäßen Lagerbuchse, bei der das Innenrohr 10 aus Metall eine gebogene Außenkontur 21 aufweist. Wie aus Fig. 4 hervorgeht, sitzt das Zwischenrohr 11 aus Kunststoff spielfrei auf der Außenseite des Innenrohres 10 auf. Über die Vulkanisationsschicht 12 ist das Zwischenrohr 11 mit dem Außenrohr 13 verbunden. Durch diese Ausgestaltung des Innenrohres 10 mit einer gebogenen Außenkontur wird eine kardanische Auslenkung des auf dem Innenrohr 10 aufsitzenden Zwischenrohres 11 und der hiermit verbundenen Teile ermöglicht.

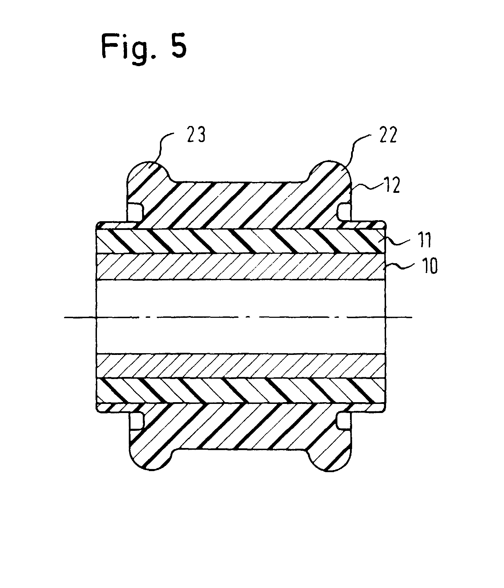

Fig. 5 zeigt eine Ausführungsform, bei der kein Außenrohr vorgesehen ist. Das zylindrische Zwischenrohr 11 sitzt an seiner Innenseite gleitbeweglich auf dem Innenrohr 10 auf. Das Zwischenrohr 11 ist mit einer Vulkanisationsschicht 12 vulkanisiert, die derart geformt ist, daß ein direktes Eindrücken in eine Aufnahme möglich ist. Hierzu sind an der Vulkanisationsschicht 12 Ansätze 22, 23 angeformt.

Nachfolgend soll das Herstellungsverfahren für die in den Fig. 1 bis 5 dargestellten Lagerbuchsen beschrieben werden. Bei der Herstellung wird das Innenrohr 10 aus Metall zusammen mit dem Zwischenrohr 11 aus Kunststoff in die Vulkanisationsform eingelegt. Bei der Vulkanisation wird das Zwischenrohr 11 aus Kunststoff auf das Innenrohr 10 aus Metall aufgepreßt. Hierbei nimmt die Innenseite des Zwischenrohres 11 aus Kunststoff die Form der Außenkontur des metallischen Innenrohres 10 an. Auf der Außenseite des Zwischenrohres 11 wird ein Haftmittel aufgebracht, um die Haftung zu der Vulkanisationsschicht 12 zu verbessern.

## Patentansprüche

1. Lagerbuchse, insbesondere für Kraftfahrzeuge, mit einem Innenrohr (10) aus Metall, und einem auf dem Innenrohr (10) mindestens in Umfangsrichtung gleitbeweglich aufsitzenden Zwischenrohr (11) aus Kunststoff, dessen Innenseite entsprechend der Außenkontur des Innenrohres (10) geformt ist und an dessen Außenseite eine Vulkanisationsschicht (12) aufgebracht ist.

2. Lagerbuchse nach Anspruch 1, dadurch gekennzeichnet, daß das Innenrohr (10) eine das Zwischenrohr (11) in axialer Richtung sichernde Außenkontur (21) aufweist.

3. Lagerbuchse nach Anspruch 1 oder 2, dadurch gekennzeichnet, daß das Innenrohr (10) mindestens eine endseitige Abschrägung (16, 17) aufweist, auf der das Zwischenrohr (11) aufliegt.

4. Lagerbuchse nach einem der Ansprüche 1 bis 3, dadurch gekennzeichnet, daß das Innenrohr (10) eine gebogene Außenkontur (21) aufweist, um eine kardanische Auslenkung des auf dem Innenrohr (10) aufsitzenden Zwischenrohres (11) zu ermöglichen.

5. Lagerbuchse nach einem der Ansprüche 1 bis 4, dadurch gekennzeichnet, daß die Vulkanisationsschicht (12) mit einer seitlich abragenden Dichtlippe (19, 20) ausgebildet ist.

6. Lagerbuchse nach einem der Ansprüche 1 bis 5, dadurch gekennzeichnet, daß die Außenseite des Zwischenrohres (11) mit einem Haftmittel versehen ist, das die Verbindung zur Vulkanisationsschicht (12) verbessert.

7. Lagerbuchse nach einem der Ansprüche 1 bis 5, dadurch gekennzeichnet, daß ein mit der Vulkanisationsschicht (12) verbundenes Außenrohr (13) vorgesehen ist.

8. Verfahren zur Herstellung einer Lagerbuchse nach einem oder mehreren der Ansprüche 1 bis 7, dadurch gekennzeichnet, daß das Innenrohr (10) und das Zwischenrohr (11) aus Kunststoff zusammen in die Vulkanisationsform eingelegt werden, wobei während der Vulkanisation das Zwischenrohr (11) der Außenkontur (21) des Innenrohres (10) entsprechend verformt wird.

9. Verfahren nach Anspruch 8, dadurch gekennzeichnet, daß auf die Außenseite des Zwischenrohres (11) ein Haftmittel aufgebracht wird, das die Verbindung zur Vulkanisationsschicht (12) verbessert.

## Claims

1. A bearing bush, more particularly for motor vehicles, comprising an inner tube (10) of metal, and an intermediate tube (11) of plastics material mounted slidingly movable at least circumferentially on said inner tube (10), the inner side of said intermediate tube (11) being shaped corresponding to the outer contour of said inner tube (10) and the outer side of said intermediate tube (11) being provided with a vulcanized coating (12).

2. The bearing bush as set forth in claim 1, characterized in that said inner tube (10) comprises an outer contour (21) locking said intermediate tube (11) axially in place.

3. The bearing bush as set forth in claim 1 or 2, characterized in that said inner tube (10) comprises at least one end slant (16, 17) against which said intermediate tube (11) rests.

4. The bearing bush as set forth in any of the claims 1 to 3, characterized in that said inner tube (10) comprises a curved outer contour (21) to permit a cardanic deflection of said intermediate tube (11) resting on said inner tube (10).

5. The bearing bush as set forth in any of the claims 1 to 4, characterized in that said vulcanized coating (12) is configured with a laterally protruding sealing lip (19, 20).

6. The bearing bush as set forth in any of the claims 1 to 5, characterized in that the outer side of said intermediate tube (11) is provided with an adhesive to improve bonding with said vulcanized coating (12).

7. The bearing bush as set forth in any of the claims 1 to 5, characterized in that an outer tube (13) connected to said vulcanized coating (12) is provided.

8. A method of producing a bearing bush as set forth in any of the claims 1 to 7, characterized in that said inner tube (10) and said intermediate tube (11) of plastics material are placed together in the vulcanizing mold, said intermediate tube (11) being deformed corresponding to the outer contour (21) of said inner tube (10) during vulcanization.

9. The method as set forth in claim 8, characterized in that an adhesive is applied to the outer side of said intermediate tube (11) to improve bonding with said vulcanized coating (12).

## Revendications

1. Coussinet, en particulier pour des véhicules automobiles, comportant un tube intérieur (10) en métal et un tube intermédiaire (11) en matière plastique posé sur le tube intérieur (10) de manière à coulisser du moins en direction périphérique, dont la face intérieure est formée en correspondance du contour extérieur du tube intérieur (10) et sur la face extérieure duquel est appliquée une couche de vulcanisation (12).

2. Coussinet selon la revendication 1, caractérisé en ce que le tube intérieur (10) présente un contour extérieur (21) bloquant le tube intermédiaire (11) en direction axiale.

3. Coussinet selon l'une ou l'autre des revendications 1 et 2, caractérisé en ce que le tube intérieur (10) présente au moins un chanfrein (16, 17) côté extrémité, sur lequel repose le tube intermédiaire (11).

4. Coussinet selon l'une quelconque des revendications 1 à 3, caractérisé en ce que le tube intérieur (10) présente un contour extérieur cintré (21) afin de permettre une articulation à la Cardan du tube intermédiaire (11) reposant sur le tube intérieur (10).

5. Coussinet selon l'une quelconque des revendications 1 à 4, caractérisé en ce que la couche de vulcanisation (12) est réalisée avec une lèvre d'étanchement (19, 20) en saillie latérale.

6. Coussinet selon l'une quelconque des revendications 1 à 5, caractérisé en ce que la face extérieure du tube intermédiaire (11) est pourvue d'un adhésif qui améliore la liaison avec la couche de vulcanisation (12).

7. Coussinet selon l'une quelconque des revendications 1 à 5, caractérisé en ce qu'il est prévu un tube extérieur (13) relié à la couche de vulcanisation (12).

8. Procédé de fabrication d'un coussinet selon l'une ou plusieurs des revendications 1 à 7, caractérisé en ce que l'on pose le tube intérieur (10) et le tube intermédiaire (11) en matière plastique conjointement dans le moule de vulcanisation, le tube intermédiaire (11) étant déformé en correspondance du contour extérieur (21) du tube intérieur (10) pendant la vulcanisation.

9. Procédé selon la revendication 8, caractérisé en ce que l'on dépose sur la face extérieure du tube intermédiaire (11) un adhésif qui améliore la liaison avec la couche de vulcanisation (12).
